**Europäisches Patentamt**

**European Patent Office**

**Office européen des brevets**

(11) Veröffentlichungsnummer: **0 151 781**

**A2**

## EUROPÄISCHE PATENTANMELDUNG

(21) Anmeldenummer: **84115969.2**

(22) Anmeldetag: **20.12.84**

(51) Int. Cl.⁴: **G 01 N 35/02**

(30) Priorität: **15.02.84 DE 3405293**

(43) Veröffentlichungstag der Anmeldung:
**21.08.85 Patentblatt 85/34**

(84) Benannte Vertragsstaaten:
**AT BE CH DE FR GB IT LI NL SE**

(71) Anmelder: **Eppendorf Gerätebau Netheler + Hinz GmbH**
**Barkhausenweg 1**
**D-2000 Hamburg 63(DE)**

(72) Erfinder: **Baisch, Manfred**
**Krohnskamp 54**
**D-2000 Hamburg 60(DE)**

(72) Erfinder: **Rüsbüldt, Horst**
**Wüsthofweg 16 a**
**D-2000 Hamburg 63(DE)**

(72) Erfinder: **Knaus, Manfred**
**Roter Hahn 17 b**
**D-2000 Hamburg 72(DE)**

(74) Vertreter: **UEXKÜLL & STOLBERG Patentanwälte**
**Beselerstrasse 4**
**D-2000 Hamburg 52(DE)**

(54) Verfahren zum Temperieren einer zu analysierenden Probenflüssigkeit sowie von Reagenzien zur Durchführung von Analysen sowie Vorrichtung zur Durchführung des Verfahrens.

(57) Zum Temperieren einer zu analysierenden Probenflüssigkeit sowie von Reagenzien und gegebenenfalls erforderlichen Lösungsmitteln zur Durchführung von Analysen in einem automatisch arbeitenden Analysengerät werden der die Probenflüssigkeit enthaltende Probenbehälter sowie die Reagenzien enthaltende Küvetten in ein Rack (1) aus gut wärmeleitfähigem Material eingesetzt. Das Rack (1) wird im Analysengerät an den einzelnen Bearbeitungsstationen zwischen zwei Seitenwänden (11,21) eingeklemmt. Mindestens eine der Seitenwände (11,21) wird beheizt, so daß eine gesteuerte Temperierung des Racks (1) und damit der Probenflüssigkeit und der Reagenzien erfolgt.

Croydon Printing Company Ltd.

## Verfahren zum Temperieren einer zu analysierenden Probenflüssigkeit sowie von Reagenzien zur Durchführung von Analysen sowie Vorrichtung zur Durchführung des Verfahrens

Die Erfindung bezieht sich auf ein Verfahren zum Temperieren einer zu analysierenden Probenflüssigkeit sowie von Reagenzien und gegebenenfalls erforderlichen Lösungsmitteln zur Durchführung von Analysen in einem automatisch arbeitenden Analysengerät, in dem die einander zugeordneten Proben und Reagenzien zu verschiedenen Bearbeitungsstationen bewegt werden.

Bei vielen Analysen und insbesondere bei gewissen Analysen in klinischen Laboratorien u.ä. ist es entscheidend, daß die Analyse bei einer bestimmten, reproduzierbaren Temperatur durchgeführt wird, damit die ermittelten Analysenergebnisse aussagekräftig sind und mit anderen Analysenergebnissen verglichen werden können. Dies ist von besonderer Bedeutung bei enzymkinetischen Messungen u.ä., bei denen während der Analyse der Reaktionsablauf ermittelt wird, wobei dieser Reaktionsablauf sehr stark von der Temperatur abhängt.

In einem bekannten Analysengerät, das von der Firma Du Pont de Nemours (Deutschland) GmbH unter der Bezeichnung "aca SYSTEM" vertrieben wird, werden unterschiedliche klinische Analysen an einer einem Patienten entnommenen Probenflüssigkeit durchgeführt. Hierzu wird für jede der durchzuführenden Analysen ein Reagenzienbehälter mit den entsprechenden Reagenzien ausgewählt. Dieser Reagenzienbehälter besteht aus einem Kunststoffbeutel, der verschiedene geschlossene Aufnahmeräume für Reagenzien hat und einen flexiblen Küvettenbereich aufweist. Der Beutel ist an einem Bügel aufgehängt, der eine das im Beutel enthaltende Reagenz kennzeichnende Codierung trägt. Von der vorhandenen Probenflüssigkeit wird ein Teil in einen Probenbehälter gefüllt, und dem Probenbehälter wird eine den Patienten identifizierende Karte zugeordnet, worauf der Probenbehälter einschließlich Karte und der Reagenzienbehälter in das Analysengerät eingeführt und der Analysenablauf gestartet wird. Dazu werden im Gerät Probenflüssigkeit aus dem Probenbehälter sowie Reagenz und gegebenenfalls Lösungsmittel in den Bereich der flexiblen Küvette gebracht und der eintretende Reaktionsablauf fotometrisch gemessen.

Um in diesem Analysengerät eine korrekte Analse durchführen zu können, müssen die Probe, die Reagenzien im Reagenzienbehälter und das gegebenenfalls erforderliche Lösungsmittel sich vor dem Zusammenfügen auf einer vorbestimmten Temperatur befinden und während des Analysenablaufs auch auf dieser Temperatur gehalten werden. Dies ist für das Lösungsmittel verhältnismäßig einfach, da es in einem Behälter im Analysengerät aufbewahrt wird, der ohne Schwierigkeiten auf einer konstanten Temperatur gehalten werden kann. Demgegenüber müssen die Probenflüssigkeit und die Reagenzien nach dem Einbringen in das Analysengerät zunächst temperiert werden, wozu sie in einen auf entsprechender Temperatur befindlichen Bereich gebracht und dort so lange gehalten werden, bis die entsprechende Temperatur erreicht ist. Nach dem Zusammenbringen der Probeflüssigkeit, Reagenzien und gegebenenfalls des Lösungsmittels muß ferner dafür gesorgt werden, daß sich die Temperatur des Gemisches nicht ändert, d.h. auch in dem Bereich des Analysengerätes, in dem die fotometrische Messung des Analysenablaufes erfolgt, muß die vorgegebene Temperatur aufrechterhalten bleiben.

Es ist ohne weiteres klar, daß die Schaffung größerer Räume in einem Analysengerät die dauernd auf einer konstanten Temperatur gehalten werden müssen, einen erheblichen apparativen Aufwand erfordert, und es ist daher Aufgabe der Erfindung, das Temperieren einer zu analysierenden Probenflüssigkeit sowie von Reagenzien und gegebenenfalls erforderlichen Lösungsmitteln sowie auch das Temperieren während des Analysenablaufes zu vereinfachen.

Zur Lösung dieser Aufgabe wird ein Verfahren der eingangs erwähnten Art erfindungsgemäß derart ausgestaltet, daß der die Probenflüssigkeit enthaltende Probenbehälter sowie die Reagenzien enthaltenden Küvetten in ein Rack aus gut wärmeleitfähigem Material eingesetzt werden, daß das Rack in das Analysengerät eingebracht und für die Zufuhr zu den einzelnen Bearbeitungsstationen in Richtung seiner Längserstreckung entlang einer geradlinigen Bahn bewegt wird und daß das Rack im Stillstand zwischen zwei sich parallel zur geradlinigen Bahn erstreckenden Seitenwänden eingeklemmt wird, von denen mindestens eine beheizt ist.

Bei dem erfindungsgemäßen Verfahren wird also ein Rack aus gut wärmeleitfähigem Material, etwa aus Metall verwendet, wie es beispielsweise in der parallelen deutschen Patentanmeldung "Verfahren zum Durchführen von Probenanalysen sowie Rack zur Durchführung des Verfahrens" (Anwaltsakte: 20 315) beschrieben ist. In dieses Rack werden alle Probenflüssigkeit und Reagenzien enthaltenden Behälter eingesetzt, und es wird nach dem Einbringen in das Analysengerät zwischen zwei Seitenwänden festgeklemmt, von denen mindestens eine, jedoch vorzugsweise beide Seitenwände beheizt sind. Diese beheizten Seitenwände geben somit an das Rack Wärme ab, wodurch die in das Rack eingesetzten Behälter und damit auch die Behälterinhalte verhältnismäßig schnell und einfach auf eine Temperatur erwärmt werden, wie sie für den weiteren Bearbeitungsablauf benötigt wird. Im Zuge des weiteren Bearbeitungsablaufes, der zunächst im wesentlichen aus dem Einbringen von Probenflüssigkeit in die verschiedenen Küvetten sowie die gegebenenfalls erforderliche Zugabe von Lösungsmitteln besteht, wird das Rack entlang der geradlinigen Bahn hin- und herbewegt und für jeden Bearbeitungsschritt wieder zwischen den Seitenwänden eingeklemmt, so daß in jeder Rack-Klemmstellung Wärme von den Seitenwänden auf das Rack übertragen und dadurch eine Temperierung vorgenommen wird. Entsprechend erfolgt auch eine Temperierung während der fotometrischen Messung der ablaufenden Analysen, so daß sich auch während dieser Analysenabläufe keine störende Temperaturänderung ergibt..

Um das Rack in den verschiedenen Klemmstellungen in eine definierte räumliche Lage quer zu seiner Längserstreckung zu bringen, kann es von der einen, quer verlagerbaren Seitenwand gegen die andere, stationäre Seitenwand gedrückt werden, d.h. das Rack liegt in jeder festgeklemmten Stellung an einer stationären Seitenwand an, so daß die Öffnungen für die Aufnahme der verschiedenen Behälter im Rack in jeder geklemmten Stellung des Racks den gleichen Abstand von der stationären Seitenwand haben.

Das Rack kann von an den Seitenwänden vorgesehenen Vorsprüngen abgestützt sein, so daß es bei Bewegung entlang der geradlinigen Bahn im wesentlichen auf diesen Vorsprüngen gleitet und sich immer in der gleichen Höhenlage bezüglich der Seitenwände befindet.

Die Erfindung betrifft ferner eine Vorrichtung zur Durchführung des erfindungsgemäßen Verfahrens, die sich auszeichnet durch zwei die geradlinige Bahn für die Bewegung des Racks seitlich begrenzende Seitenwände, von denen mindestens eine beheizbar ist und von denen mindestens eine quer zur Bahn bewegbar ist, wobei vorzugsweise die eine Seitenwand stationär gehalten ist.

In einer Ausgestaltung der erfindungsgemäßen Vorrichtung ist die bewegbare Seitenwand an blattfederförmigen Halterungen befestigt sowie mit einem Druckstück verbunden, das an einem zwischen einer Rack-Freigabestellung und einer Rack-Klemmstellung bewegbaren Träger befestigt ist. Dadurch kann durch vom Analysengerät gesteuerte Verlagerung des Trägers über das Druckstück die entsprechende Verlagerung der bewegbaren Seitenwand erfolgen, wobei die blattfederförmigen Halterungen einen sehr einfachen Aufbau ermöglichen und Toleranzen in den Rack-Abmessungen auf einfache Weise ausgleichen.

Im Bereich zwischen der bewegbaren Seitenwand und dem Träger kann ein parallel zur Bahn bewegbarer Schlitten vorgesehen sein, der ein Transportelement zum formschlüssigen Eingriff mit dem Rack sowie ein Verriegelungsteil trägt, und am Träger können in Richtung der Bahn im Abstand voneinander Verriegelungsbereiche zum verriegelnden Eingriff mit dem Verriegelungsteil in der Rack-Klemmstellung des Trägers vorgesehen sein.

Mit Hilfe eines derartigen Schlittens und des an ihm angebrachten Transportelementes kann das Rack auf einfache Weise entlang der geradlinigen Bahn bewegt und in die gewünschten Stellungen gebracht werden, während der Eingriff von Verriegelungsteil und Verriegelungsbereich eine genaue Positionierung des Racks an einer durch den jeweiligen Verriegelungsbereich gegebenen Stelle bewirkt.

Um zu verhindern, daß sich die einander zugewandten Flächen der beiden Seitenwände infolge der Bewegung des Racks entlang der geradlinigen Bahn allmählich abschleifen, und um ferner zu verhindern, daß die einander zugewandten Flächen der Seitenwände entsprechende Abrieberscheinungen an den Außenflächen der Racks hervorrufen, können in den einander zugewandten Flächen der beiden Seitenwände parallel zur Bahn verlaufende Führungsschienen, beispielsweise aus Kunststoff, angeordnet sein, die gegen Federdruck in die Seitenwände hinein verlagerbar sind.

Die Führungsschienen aus entsprechend geeignetem Material verhindern während des Transportes entlang der geradlinigen Bahn einen Abrieb hervorrufenden Eingriff zwischen den Außenflächen des Racks und den einander zugewandten Flächen der beiden Seitenwände, während sie in der Rack- Klemmstellung in die Seitenwände hineingedrückt sind, so daß sich ein Flächenkontakt zwischen den Seitenflächen des Racks und den einander zugewandten Flächen der beiden Seitenwände und damit eine gute Wärmeübertragung ergibt.

In einer besonders vorteilhaften Ausgestaltung können in jeder Seitenwand zwei Führungsschienen vorgesehen sein, und die jeweils untere Führungsschiene kann einen in den Raum zwischen den Seitenwänden hineinragenden Steg zur Auflage des Racks in der Rack-Freigabestellung aufweisen. Dadurch sind keine zusätzlichen Vorsprünge für die Abstützung des Racks während seiner Bewegung entlang der geradlinigen Bahn zwischen den beiden Seitenwänden erforderlich, sondern diese Abstützung wird durch die unteren Führungsschienen mit übernommen, wobei zwischen den Stegen der beiden Seitenwände ausreichend Platz verbleibt, daß das Transportelement zwischen ihnen hindurch in formschlüssigen Eingriff mit dem Rack kommen kann.

Die Erfindung wird im folgenden anhand der das Prinzip der erfindungsgemäßen Vorrichtung zeigenden Figur näher erläutert.

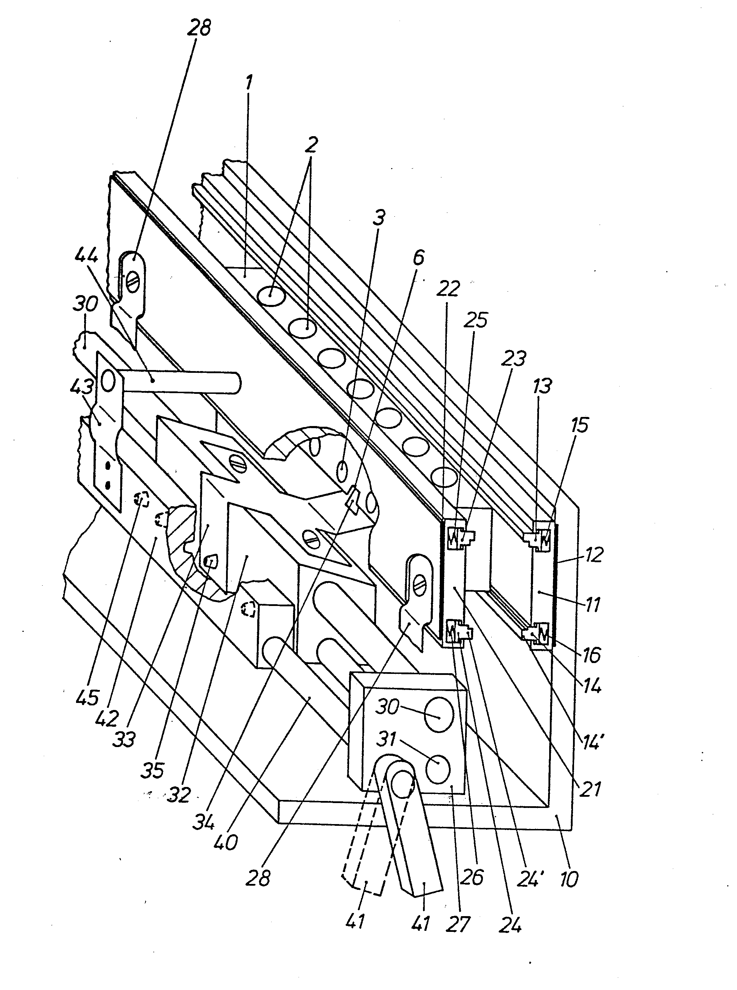

Der dargestellte Teil der Vorrichtung ist auf einem im Gehäuse eines Analysengerätes stationär befestigten Montagewinkel 10 angeordnet. Im oberen Endbereich des einen Schenkels des Montagewinkels 10 ist eine stationäre Seitenwand 11 befestigt, die aus gut wärmeleitfähigem Metall besteht und zwischen der und dem Montagewinkel 10 eine Heizung 12 vorgesehen ist, mit deren Hilfe die Seitenwand 11 gesteuert erwärmt werden kann. Der stationären Seitenwand 11 gegenüberliegend befindet sich eine Seitenwand 21, die ebenfalls aus gut wärmeleitfähigem Metall besteht und die über zwei blattfederförmige Halterungen 28 in nicht dargestellter Weise am Montagewinkel 10 befestigt ist. An der Rückseite, also an der der Seitenwand 11 abgewandten Seite der Seitenwand 21 ist ebenfalls eine Heizung 22 vorgesehen, die zum gesteuerten Erwärmen der Seitenwand 21 dient. In den einander zugewandten Flächen der Seitenwände 11 und 21 sind jeweils Aufnahmenuten vorgesehen, in denen Führungsschienen 13,14 und 23,24 angeordnet sind. Zwischen dem jeweiligen Nutgrund und der Führungsschiene befinden sich Federn 15,16 und 25,26, die die Führungsschienen 13,14 und 23,24 in die in der Figur dargestellte Lage drücken. Die Aufgabe und die Funktionsweise der Führungsschienen wird später beschrieben werden.

An der Außenseite der Seitenwand 21 ist ein zapfenförmiges Druckstück 44 befestigt, dessen freies Ende an einem als Halterung dienenden Federstreifen 43 angebracht ist. Der Federstreifen 43 ist an einem länglichen, im wesentlichen rechteckförmigen Träger 42 mittels Schrauben oder Nieten befestigt. Der Träger sitzt auf einer Rastwelle 40, die in am Montagewinkel 10 befestigten Lagerböcken 27, von denen nur einer dargestellt ist, um ihre Längsachse schwenkbar gelagert ist. An dem dargestellten äußeren Ende der Rastwelle 40 ist ein Betätigungshebel 41 angebracht, mit dessen Hilfe das Verschwenken der Rastwelle 40 bewirkt wird.

Benachbart zur Rastwelle 40 und näher an der Seitenwand 21 befinden sich zwei parallel verlaufende Führstangen 30,31, die in den Lagerböcken 27 unverdrehbar befestigt sind. Auf diesen Führstangen ist ein Schlitten 32 in Längsrichtung der Führstangen bewegbar gelagert, dessen Antrieb nicht dargestellt ist. Als Antrieb kann beispielsweise ein Linearmotor dienen. Am Schlitten 32 ist eine federnde Halterung 33 befestigt, die auf einem Schenkel ein im Querschnitt trapezförmiges Transportelement 34 und auf einem anderen gegenüberliegenden Schenkel ein kegelstumpfförmiges Verriegelungsteil 35 trägt. Das Verriegelungsteil 35 kommt in der noch zu beschreibenden Rack-Klemmstellung in Eingriff mit entsprechend geformten Verriegelungsaussparungen 45 im Träger 42, so daß sich jeweils definierte Stellungen des Schlittens bezüglich der Längsrichtung der Führungsstangen ergeben. Das Transportelement 34 steht in Eingriff mit einem entsprechend geformten Schlitz 6 im Boden des zwischen den Seitenwänden 11 und 21 befindlichen Racks 1 (die getrennte Darstellung in der Figur dient nur zur Verdeutlichung der einzelnen Formen).

Das längliche Rack 1 hat einen im wesentlichen rechteckförmigen Querschnitt und besteht aus gut wärmeleitfähigem Material, etwa Metall. Es weist nach oben offene Aufnahmeöffnungen 2 für einen Probenbehälter und verschiedene, Reagenzien enthaltende Küvetten auf. Diese Aufnahmeöffnungen sind so geformt, daß sich die Küvetten nur derart in das Rack 1 einstecken lassen, daß ihre zur Messung von Reaktionsabläufen zu durchstrahlenden optischen Flächen im Bereich von sich quer durch das Rack 1 erstreckenden Bohrungen 3 liegen, wobei selbstverständlich jeder Aufnahmeöffnung 2 eine Bohrung 3 zugeordnet ist. In diesem Zusammenhang sei erwähnt, daß die Station zur fotometrischen Messung in der Figur nicht dargestellt ist, sondern an einer Stelle außerhalb der Zeichenebene und weiter hinten liegen kann. An dieser Stelle sind dann selbstverständlich Öffnungen in den Seitenwänden vorgesehen, um das Durchstrahlen zu ermöglichen.

Zur Durchführung von Analysen wird das mit dem Probenbehälter und den Küvetten befüllte Rack 1 in das Analysengerät eingebracht und von diesem zwischen die beiden Seitenwände 11 und 21 bewegt, die sich in der dargestellten Lage in einem solchen Abstand voneinander befinden, daß das Rack 1 in Richtung seiner Längserstreckung bewegbar ist. In dieser Lage ruhen die Randbereiche der Bodenfläche des Racks 1 auf den Stegen 14' und 24' der Führungsschienen 14 und 24, während einerseits die Stege 13 und 23 und andererseits entsprechende Flächen der Führungsschienen 14 und 24 an den Außenflächen des Racks 1 anliegen und dieses bei Verlagerungsbewegungen führen. Die Verlagerungsbewegungen erfolgen durch Bewegung des Schlittens 32 entlang der Führstangen 30,31, wobei der Schlitten 32 das Rack 1 über das in Eingriff mit der Nut 6 stehende Transportelement 34 entsprechend mitnimmt. In dieser Betriebsstellung der Vorrichtung befindet sich der Betätigungshebel 41 in der ausgezogenen, also in der Figur nach rechts verschwenkten Lage, wodurch der oberhalb der Rastwelle 40 liegende Bereich des Trägers 42 nach links verschwenkt ist. In dieser Lage hat einerseits das Druckstück 44 die Seitenwand 21 um eine gewisse Strecke von der Seitenwand 11 wegbewegt und andererseits stehen die Verriegelungsaussparungen 45 außer Eingriff mit dem Verriegelungsteil 35, so daß die Bewegung des Schlittens 32 entlang der Führungsstangen 30,31 nicht durch einen Verriegelungseingriff behindert wird.

Wie bereits erwähnt, wird das Rack 1 durch Verlagerung des Schlittens 32 in Längsrichtung bewegt. Diese Bewegung wird so gesteuert, daß das Rack 1 in eine Bearbeitungsstellung gebracht wird, etwa zum Einbringen von Probenflüssigkeit in eine ein Reagenz enthaltende Küvette, eine Stellung zum Einbringen von Lösungsmittel in die Küvette, eine Stellung zur fotometrischen Messung u.a. Ist eine derartige Stellung erreicht, wird der Betätigungshebel 41 mittels eines nicht gezeigten Antriebs nach links in die gestrichelt gezeichnete Stellung verschwenkt. Dadurch erfolgt ein Verschwenken des oberhalb der Rastwelle 40 befindlichen Teils des Trägers 42, so daß das Druckstück 44 die Seitenwand 21 in Richtung auf die Seitenwand 11 verlagert. Dadurch werden die Führungsschienen 13,14,23,24 gegen den Druck der Federn 15,16,25,26 in die zugehörigen Aufnahmenuten hineingedrückt und das Rack 1 zwischen den einander gegenüberliegenden Flächen der Seitenwände 11 und 21 eingeklemmt. In dieser Rack-Klemmstellung bewirkt die Blattfeder 43 den Ausgleich von Toleranzen und stellt so die Rack-Klemmstellung sicher.

Beim Übergang von der dargestellten Rack-Freigabestellung in die Rack-Klemmstellung erfolgt eine Verlagerung des Racks 1 aus der dargestellten Lage näher an die Seitenwand 11 heran. Diese Bewegung kann trotz des Eingriffs des Transportelementes 34 mit der Nut 6 des Racks erfolgen, da Transportelement 34 und Nut 6 so geformt sind, daß zwischen ihnen eine Relativbewegung quer zur Längserstreckung des Racks 1 möglich ist.

Wenn der oberhalb der Rastwelle 40 liegende Teil des Trägers 42 beim Übergang in die Rack-Klemmstellung, wie bereits erläutert, näher an den Schlitten 32 heranbewegt wird, kommt auch eine Verriegelungsaussparung 45 in Eingriff mit dem am Schlitten 32 befestigten Verriegelungsteil 35. Da das Verriegelungsteil 35 und die Verriegelungsaussparung 45 kegelstumpfförmig ausgebildet sind, führt dieser Eingriff zu einer gewissen Verlagerung des Schlittens 32 in Längsrichtung der Führungsstangen 30,31, falls Verriegelungsaussparung 45 und Verriegelungsteil 35 nach der durchgeführten Transportbewegung des Schlittens 32 nicht in genau fluchtender Stellung zueinander liegen. Diese Verlagerungsbewegung bewirkt eine Korrektur der Schlittenstellung 32, so daß die exakte Rack-Position durch die Lage der Verriegelungsaussparung 45 an dem stationär gehalterten Träger 42 gegeben ist.

Wie bereits erwähnt, liegen die Seitenflächen des Racks 1 in der Rack-Klemmstellung an den einander gegenüberliegenden Flächen der Seitenwände 11 und 21 an. Da die Seitenwände 11,21 durch die Heizungen 12,22 gesteuert erwärmt werden, erfolgt ein entsprechender Wärmeübergang auf das Rack 1 und somit eine gesteuerte Erwärmung der im Probenbehälter befindlichen Probenflüssigkeit sowie der Reagenzien in den Küvetten. Diese Temperierung wird in jeder Rack-Klemmstellung erneut vorgenommen, so daß auch nach erfolgter Mischung und während der fotometrischen Messung immer wieder eine Temperierung stattfindet, die Temperatur der verschiedenen Materialien also während des gesamten Durchlaufs auf einfache Weise konstant gehalten wird.

Ansprüche

1. Verfahren zum Temperieren einer zu analysierenden Probenflüssigkeit sowie von Reagenzien und gegebenenfalls erforderlichen Lösungsmitteln zur Durchführung von Analysen in einem automatisch arbeitenden Analysengerät, in dem die einander zugeordneten Proben und Reagenzien zu verschiedenen Bearbeitungsstationen bewegt werden, dadurch gekennzeichnet, daß der die Probenflüssigkeit enthaltende Probenbehälter sowie die Reagenzien enthaltenden Küvetten in ein Rack (1) aus gut wärmeleitfähigem Material eingesetzt werden, daß das Rack (1) in das Analysengerät eingebracht und für die Zufuhr zu den einzelnen Bearbeitungsstationen in Richtung seiner Längserstreckung entlang einer geradlinigen Bahn bewegt wird und daß das Rack (1) im Stillstand zwischen zwei sich parallel zur geradlinigen Bahn erstreckenden Seitenwänden (11,21) eingeklemmt wird, von denen mindestens eine beheizt ist.

2. Verfahren nach Anspruch 1, dadurch gekennzeichnet, daß das Rack (1) von der einen, quer verlagerbaren Seitenwand (21) gegen die andere, stationäre Seitenwand (11) gedrückt wird.

3. Verfahren nach Anspruch 1 oder 2, dadurch gekennzeichnet, daß das Rack (1) von an den Seitenwänden (11,21) vorgesehenen Vorsprüngen (14;24;) abgestützt wird.

4. Vorrichtung zur Durchführung des Verfahrens gemäß einem der Ansprüche 1 bis 3, gekennzeichnet durch zwei die geradlinige Bahn für die Bewegung des Racks (1) seitlich begrenzende Seitenwände (11,21), von denen mindestens eine beheizbar ist und von denen mindestens eine quer zur Bahn bewegbar ist.

5. Vorrichtung nach Anspruch 4, dadurch gekennzeichnet, daß eine Seitenwand (11) stationär gehalten ist.

6. Vorrichtung nach Anspruch 5, dadurch gekennzeichnet, daß die bewegbare Seitenwand (21) an blattfederförmigen Halterungen (28) befestigt sowie mit einem Druckstück (44) verbunden ist, das an einem zwischen einer Rack-Freigabestellung und einer Rack-Klemmstellung bewegbaren Träger (42) befestigt ist.

7. Vorrichtung nach Anspruch 6, dadurch gekennzeichnet, daß im Bereich zwischen der bewegbaren Seitenwand (21) und dem Träger (42) ein parallel zur Bahn bewegbarer Schlitten (32) vorgesehen ist, der ein Transportelement (34) zum formschlüssigen Eingriff mit dem Rack (1) sowie ein Verriegelungsteil (35) trägt, und daß am Träger (42) in Richtung der Bahn im Abstand voneinander Verriegelungsaussparungen (45) zum verriegelnden Eingriff mit dem Verriegelungsteil (35) in der Rack-Klemmstellung des Trägers (42) vorgesehen sind.

8. Vorrichtung nach einem der Ansprüche 4 bis 7, dadurch gekennzeichnet, daß in den einander zugewandten Flächen der beiden Seitenwände (11;21) parallel zur Bahn verlaufende Führungsschienen (13,14;23,24) angeordnet sind, die gegen Federdruck in die Seitenwände (11;21) hinein verlagerbar sind.

9. Vorrichtung nach Anspruch 8, dadurch gekennzeichnet, daß die Führungsschienen (13,14;23,24) aus Kunststoff bestehen.

10. Vorrichtung nach Anspruch 8 oder 9, dadurch gekennzeichnet, daß in jeder Seitenwand (11;21) zwei Führschienen (13,14;23,24) vorgesehen sind und daß die jeweils untere Führschiene (14;24) einen in den Raum zwischen den Seitenwänden (11,21) hineinragenden Steg (14';24') zur Auflage des Racks (1) in der Rack-Freigabestellung aufweist.